# EUROPÄISCHE PATENTSCHRIFT

(11) **EP 0 357 826 B1**
(45) Veröffentlichungstag und Bekanntmachung des Hinweises auf die Patenterteilung: **21.04.1993**
(21) Anmeldenummer: 88114718.5
(22) Anmeldetag: 09.09.1988
(51) Int. Cl.: B60C 9/18, B60C 9/20

(54) **Gürteleinlage für Luftreifen**
Breaker for pneumatic tyres
Ceinture de renforcement pour pneumatiques

(43) Veröffentlichungstag der Anmeldung: 14.03.1990
(73) Patentinhaber: TYRE CONSULT VENLO B.V., 5911 AZ Venlo (NL)
(72) Erfinder: Janus, Jonny, D-4000 Düsseldorf (DE)
(74) Vertreter: Türk, Gille, Hrabal, Leifert

(56) Entgegenhaltungen:
- EP-A- 0 264 539
- DE-A- 2 355 489
- FR-A- 1 290 231
- FR-A- 2 425 953
- US-A- 1 428 726
- US-A- 3 842 885

## Beschreibung

Die Erfindung betrifft eine radial verformbare Gürteleinlage für Luftreifen, welche wenigstens einen sich in Umfangsrichtung des Reifens erstreckenden Ring aus Folien- oder Bandmaterial aufweist, wobei dieser Ring quer zur Umlaufrichtung des Reifens sich erstreckende Dehnungszonen wie Wellungen und/oder Aus- bzw. Einbuchtungen aufweist.

Gürteleinlagen dieser Art sind bekannt (EP 0 191 124 A1), jedoch dient der hierbei vorgesehene, beispielsweise wellenförmig ausgebildete Ring allein zum Erzeugen der gewünschten Quersteifigkeit, während für die Umfangssteifigkeit zusätzliche Festigkeitsträger vorgesehen sind.

Andererseits sind ringförmige Gürteleinlagen für Luftreifen bekannt (DE-A-1 194 720 und DE-A-2 355 489), die sowohl zug- als auch druckfest sind. Die in diesen, eine verhältnismäßig große bzw. hohe Dicke aufweisenden Gürteleinlagen vorgesehenen Einschnitte und/oder Ausnehmungen dienen dazu, den Durchgriff des umgebenden Gummimaterials des Luftreifens zu ermöglichen und ggf. die Biegsamkeit an den Rändern zu verbessern, sie sollen aber die Festigkeit und Steifigkeit in Umfangsrichtung nicht beeinflussen. Deshalb sind diese bekannten Gürteleinlagen auch nicht in der Lage, den Längenveränderungen des mit einer solchen Gürteleinlage ausgestatteten Luftreifens beim Durchlaufen des Aufstandbereichs elastisch zu folgen, so daß mit derartigen Gürteleinlagen ausgestattete Luftreifen wegen ausgeprägter Materialverdrängungen aus dem Aufstandsbereich in den unbelasteten Umfang sowie wegen kleiner Biegeradien in den Rollwülsten und stehenden Wellen verhältnismäßig schnell verschleißen, sich in Folge der dadurch entstehenden Temperaturen im polymeren Material desintegrieren und auch keinen angenehmen Fahrkomfort vermitteln. Auch können diese bekannten Gürteleinlagen die in der Praxis notwendigen örtlichen radialen Verformungen im Aufstandsbereich aus der zylindrischen Form des festen Gürtelbandes nicht ausführen.

Es ist weiterhin bekannt (EP 0 264 539 A2), eine Gürteleinlage für Luftreifen aus einer sinusförmig gewellten Kunststoff-Folie herzustellen, die aufgrund der in Querrichtung verlaufenden Wellungen in Umfangsrichtung eine gewisse Dehnbarkeit aufweist. Da die Wellung ununterbrochen ist und verhältnismäßig flach verläuft, ist die Dehnbarkeit des in das Gummimaterial des Luftreifens eingebetteten Gürteleinlage in manchen Fällen unzureichend, insbesondere ist die Elastizität nicht ausreichend. Aus diesem Dokument ist es auch bekannt, in aus einzelnen Streifen zusammengesetzten Gürteleinlagen Löcher vorzusehen, durch welche das Gummimaterial hindurchtreten kann, um eine formschlüssige Verbindung zwischen der Einlage und dem Gummimaterial zu erzielen. - Bei Luftreifen ist es weiterhin bekannt (US-A 1 428 726), eine undehnbare bandförmige Gürteleinlage vorzusehen, die Löcher für den Durchtritt des Gummimaterials enthält, um eine formschlüssige Verbindung zwischen Gummi und Gürteleinlage zu erhalten.

Der Erfindung liegt die Aufgabe zugrunde, eine ringförmige Gürteleinlage der eingangs genannten Gattung derart zu verbessern, daß diese einerseits sowohl die gewünschte Quersteifigkeit als auch die gewünschte Umfangsstabilität des mit einer derartigen Einlage ausgestatteten Luftreifens gewährleistet, andererseits aber auch sicherstellt, daß mit einer derartigen Gürteleinlage ausgestattete Luftreifen im Aufstands- oder Abplattungsbereich des Luftreifens im praktischen Gebrauch eine ausreichende Elastizität aufweisen, so daß keine schädlichen Relativbewegungen zwischen den Gummipartikeln und der Fahrbahn entstehen und alle Verformungen ohne störende Auswirkungen auf den Luftreifen und ohne Beeinträchtigung des Fahrkomforts eines mit derartigen Luftreifen ausgestatteten Fahrzeuges aufgenommen und übertragen werden können.

Diese Aufgabe wird erfindungsgemäß bei einer Gürteleinlage der eingangs genannten Gattung dadurch gelöst, daß der Ring dieser Einlage sich in seiner Umfangsrichtung und Querrichtung erstreckende Löcher oder Ausnehmungen begrenzter Länge enthält. Die Gürteleinlage hat in Umfangsrichtung gesehen im Abstand voneinander Dehnungszonen, beispielsweise in Mäander form, zwischen mehr oder weniger undehnbaren Zonen, so daß eine betriebsbedingt gedehnte ringförmige Einlage sowohl für die gewünschte Umfangssteifigkeit bei gleichzeitiger Queraussteifung und außerdem für eine gewisse Rückformung im Aufstandsbereich eines entsprechend ausgestatteten Luftreifens sorgt. Man erhält somit eine äußerst leichte Gürteleinlage für Luftreifen, die im Aufstandsbereich des Luftreifens aufgrund ihrer Scheibenform in Querrichtung ein außerordentlich hohes Widerstandsmoment liefert und die alle an eine derartige Einlage gestellten Aufgaben in optimaler Weise erfüllt.

Umfangreiche Prüfstandversuche haben ergeben, daß Lenkpräzision und Schräglaufsteife von Luftreifen nicht allein von den Eigenschaften der die Aufstandssehne durchlaufenden Gürtelplatte des Luftreifens bestimmt wird. Vielmehr spielt auch die Charakteristik des unbelasteten Reifenumfangs eine bestimmte Rolle.

Gürtelstrukturen wie kreuzweise verlaufende Stahlkordeinlagen haben infolge der unzähligen Gummibrücken zwischen den einzelnen Festigkeitsträgern entsprechend viele Freiheitsgrade für laterale Verformungen.

Demgegenüber schafft die erfindungsgemäße homogene und vorzugsweise einteilige Gürteleinlage beidseits der abgeplatteten Gürtelsehne "Halbschalen", die unter den radial wirkenden Betriebsbedingungen so fixiert sind, daß laterale Verformungen praktisch nicht möglich sind. Damit ist Gewähr für eine exakte und formtreue Anlenkung der belasteten Gürtelplatte an dem unbelasteten Umfangsteil des Luftreifens gegeben, denn laterale Verformungen wären unter diesen Bedingungen nur über Radiusänderungen möglich. Dies läßt aber die Umfangssteife des Luftreifens nicht zu.

Die Löcher oder Ausnehmungen der erfindungsgemäßen Gürteleinlage befinden sich im Bereich der Aus- bzw. Einbuchtungen. Somit hat die Gürteleinlage zwischen den in Umfangsrichtung begrenzt elastischen Abschnitten ununterbrochene Zonen, die für eine hohe Stabilität sorgen. Die Ausnehmungen können sich in Querrichtung des Ringes erstreckende Lücken der Aus- bzw. Einbuchtungen sein, aber auch von den Seiten ausgehende Einschnitte, so daß die Gürteleinlage auch im Schulterbereich des Luftreifens eine ausreichende Verformbarkeit aufweist, um sich der Form des bombierten Luftreifens problemlos anzupassen.

Im Gegensatz zu den bekannten zug- und druckfesten Gürteleinlagen (DE-A-1 194 720 und DE-A-2 355 489) trägt die Erfindung dem Rechnung, daß die Gürtelstruktur in Umfangsrichtung eines entsprechend ausgestatteten Gürtelreifens in der Lage sein muß, sich der Längenänderungen des Reifenumfangs beim Durchlauf der Abplattungszone des Reifens im Aufstandbereich anzupassen.

So kann eine definierte Verformung bei einstückiger Ausbildung der Gürteleinlage und damit eine begrenzte Dehnbarkeit und Rückformung bzw. Überformung auch dadurch erreicht werden, daß man in den Dehnungszonen bzw. Aus- bzw. Einbuchtungen parallele Längsschlitze oder Löcher vorsieht und die zwischen benachbarten Längsschlitzen oder Löchern befindlichen Abschnitte des Gürtels oder Ringes abwechselnd nach der einen oder anderen Seite ausbuchtet. Andererseits ist es auch möglich, die Aus- bzw. Einbuchtungen mit Ausschnitten zu versehen, welche die Aus-bzw. Einbuchtungen unterbrechen.

Auch können die unterschiedlichen Eigenschaften der beispielsweise ein Komposit bildenden Materialien der Gürteleinlage zu der gewünschten Dehnung und Rückformung führen. Eine Kompression bzw. Stauchung ist im Falle eines Materialkomposits allerdings ausgeschlossen. Diese Ausführungsform setzt eine reversible Dehnung des Ringes der Gürteleinlage von etwa 5 % voraus.

Im Idealfall kann eine einlagige Gürteleinlage von z.B. 0,6 mm Dicke direkt unterhalb des Gummilaufstreifens angeordnet sein, so daß die zykloide Rollkurve des Abrollumfangs der Gürtelstruktur nahezu identisch verläuft mit der des Laufstreifen-Außenumfanges. Da sich hierdurch vorteilhafterweise nur sehr kleine Verschiebungen der Aufsetzpunkte der beiden Zykloiden ergeben, treten auch nur entsprechend kleine Verspannungen zwischen der Gürtelstruktur und der Laufstreifenoberfläche auf, die wiederum durch das aus der Vorformung der Gürteleinlage bzw. deren definierter elastischer Dehnung und der korresponierenden Rückformung entstehende größere Formschlupfpotential so vorteilhaft ausgeglichen werden kann, daß unter normalen Betriebsbedingungen praktisch kein Gleiten zwischen Gummioberfläche des Laufstreifens und der Fahrbahn auftreten kann. Die Folge ist ein wesentlich besseres Trocken-, Naß-, Eis-und Schneegriffverhalten. Außerdem erhöht sich hierdurch die Kraftübertragung und reduziert sich der Gummiabrieb sowie die Geräuschentwicklung.

Wenn die erfindungsgemäße ringförmige Gürteleinlage beispielsweise allein zum Erzielen guter Handling- und Seitenführungseigenschaften extrem dünn gewählt wird, z B. 0,1 mm und dünner, steht hierzu infolge des hohen lateralen Widerstandsmomentes der zur Scheibe abgeplatteten Gürteleinlage die gesuchte Charakteristik zur Verfügung.

In einem solchen Fall reicht allerdings der verfügbare tragende Querschnitt allein nicht aus, um die notwendige Umfangssteife sicherzustellen bzw. den mehrachsigen Spannungs- und Verformungsangriffen, jeweils im Übergang vom unbelasteten Umfang zur Gürtelplatte im Aufstandsbereich bzw. im Ein- und Auslauf, zu widerstehen.

Durch geeignete Verstärkung, z.B. eine 90°-Cordlage, die aus Stahl bestehen oder textile Festigkeitsträger aufweisen kann, zum Reduzieren mehrachsiger Spannungs- oder Verformungsangriffe kann die extrem leichte, aber dennoch seitensteife erfindungsgemäße Gürteleinlage für ihre eigentliche Aufgabe freigestellt werden.

Im Zusammenhang mit dem erfindungsgemäß hohen Freiheitsgrad an radialer Verformbarkeit der Gürteleinlage ist es möglich, dem Reifen durch unterschiedliche Dimensionierung der Festigkeitsstruktur verschiedene spezifische Charakteristiken zu geben. So kann z.B. eine insgesamt weiche Gürtelstruktur durch die gezielte Begrenzung der Ränder gegen Streckung betont direkt auf Lenkbewegungen des Luftreifens ausgelegt werden.

Andererseits läßt sich ein infolge seines lateralen Widerstandmomentes ohnehin seitensteifer Gürtel in seinen Geradeauslaufeigenschaften, insbesondere in seinem Trocken- und Naßgriff, durch Verstärkung der elastischen Eigenschaften des mittleren Laufstreifenbereiches wesentlich optimieren, ohne jedoch hierdurch direkter zu werden.

Obwohl in vielen Fällen ein einziger Ring aus Folien- oder Bandmaterial für die Gürteleinlage ausreichend ist, können auch mehrere derartige Ringe in nebeneinander- und übereinanderliegenden Lagen vorgesehen sein bzw. in einer Lage endlos gewickelt werden. Wichtig ist, daß jeder Ring aufgrund seiner Gestaltung, Vorformung oder Konstruktion eine ausreichende Dehnung erlaubt, um den Verformungen des entsprechend ausgestatteten Reifens im praktischen Betrieb und insbesondere im Aufstandsbereich elastisch folgen bzw. sie übertragen zu können. Auch sind Kombinationen mit anderen Festigkeitsträgern einer Gürteleinlage möglich.

Die Formgestaltung der erfindungsgemäßen Gürteleinlage ist so gewählt, daß keine schädlichen Spannungsspitzen im Reifen auftreten Betriebsbedingte "Einspannungen" zwischen Radlast und Fahrbahn übertragen auch extrem hohe Seitenkräfte weitgehend verformungsarm.

Zweckmäßig sind die quer zur Umfangsrichtung der ringförmigen Gürteleinlage verlaufenden Ein- und Ausbuchtungen bzw. Sicken so gelocht, daß ihre radial wirkende Versteifung partiell unterbrochen ist. An diesen Stellen kann der Gürtel ohne Gefahr von Spannungsrissen radial verformt werden, z.B. wenn ein entsprechend ausgestatteter Luftreifen Steine, scharfe Kanten u.dgl. überfährt, ohne daß hierbei die hohe Seitensteifigkeit beeinträchtigt würde. Diese Vorteile erlauben auch eine problemlose konvexe Bombage des Reifenrohlings bei der Herstellung.

Zwischen den vorgeformten und durch Lochungen unterbrochenen Aus- bzw. Einbuchtungen befinden sich glatte, ebene Abschnitte des als Festigkeitsträger dienenden Ringes, die in allen Richtungen radial biegsam sind, aber in ihrer Ebene als Scheibe wirken und somit ein hohes Widerstandsmoment gegen seitliche Verformungen liefern.

Obwohl der Ring aus homogenem Folien- oder Bandmaterial, z.B. Stahl oder Polyamid, einstückig hergestellt sein kann, ist es auch möglich, das Bandmaterial aus einem mit Fasern oder Fäden verstärkten Komposit zu bilden. Wichtig ist in diesem Fall, daß sich die Gürteleinlage aufgrund ihrer Materialeigenschaften oder Oberflächenbeschaffenheit mit dem Gummimaterial eines Luftreifens dauerhaft innig und ohne die Gefahr von Ablösungserscheinungen verbindet, ohne daß dazu Ausnehmungen und/oder Einschnitte notwendig wären, wenn diese auch nicht schaden.

Da bei der erfindungsgemäßen Gürteleinlage der in Umfangsrichtung verlaufende folien- oder bandförmige Ring sich über die gesamte Breite der Lauffläche eines entsprechend ausgestatteten Luftreifens und ggf. über die Schultern hinaus auch bis in die Flanken dieses Luftreifens erstrecken kann, ergibt sich eine hohe Seitensteifigkeit oder Quersteifigkeit, weil z.B. der radial zur Mitte etwa U-förmige Querschnitt mit seinen Rändern außerhalb des umfangbelasteten Laufstreifens an den Festigkeitsträgern der Karkasse verankert ist, so daß keine störenden Relativbewegungen zwischen den parallel zueinander zwischen den gelochten Sicken verlaufenden ungelochten Abschnitten auftreten. Auch liefert eine derartige Gürteleinlage hohe Torsionssteifigkeiten, ohne unter Einfluß von Seitenkräften zu unerwünschten Verformungen zu führen. Die Umfangsarbeit der Gürteleinlage, d.h. eine elastische definierte Dehnung und Rückverformung und sogar begrenzte Überformung, ist ohne Gefahr für Materialbrüche und plastische bzw. Dauerverformungen gewährleistet.

Das Einfedern eines entsprechend ausgestatteten Luftreifens sowie das Überfahren von Unebenheiten, auch scharfkantiger Hindernisse, wird durch die radiale Vorformung wesentlich erleichtert. Die erfindungsgemäße Gürteleinlage hat hohe radiale Freiheitsgrade, so daß sowohl eine ursprünglich konvexe Form des Gürtels im Abplattungsbereich eben werden kann, ohne daß die Gürteleinlage derartige Bewegungen unerwünscht behindert.

Die erfindungsgemäße Gürteleinlage liefert also die gewünschte Stabilität entsprechend ausgestatteter Luftreifen, ohne die im praktischen Betrieb notwendigen flexiblen elastischen Bewegungen des Reifens bzw. der Komponenten desselben zu beeinträchtigen.

Für die erfindungsgemäße Gürteleinlage können hochfeste Werkstoffe mit extrem niedrigen Dicken von beispielsweise 0,06 mm Anwendung finden, wobei die Einlage aus Metall wie Stahl, aber ebenso aus Polyamidfolie oder ähnlichem, bestehen kann.

An den Stoßstellen eines aus einer Folie bzw. einem Band geformten Ringes oder Gürtels können stufenweise versetzte Verbindungsnähte oder Stöße bzw. in einem kleinen Winkel zur Umfangsrichtung verlaufende Verbindungen vorgesehen sein.

Wie bereits oben ausgeführt, kann die Gürteleinlage einlagig oder mehrlagig sein. Jeder als Festigkeitsträger dienende Ring liefert sowohl die gewünschte Umfangssteifigkeit als auch die ebenfalls gewünschte Quersteifigkeit, ist aber andererseits in der Lage, im Aufstandsbereich des entsprechend ausgestatteten Luftreifens die erforderliche Änderung der Umfangslänge aus einem Kreisbogenabschnitt in die Abplattung mitzumachen. Somit ist die Gürteleinlage auch elastisch dehnbar und rückstellbar, so daß sie als Tangentialfeder bei Dehnung Energie aufnimmt und diese im Aufstandsbereich des Luftreifens zur Kontraktion wieder freigibt. Hierdurch ist eine energiesparende Betriebsweise gewahrleistet. Hingegen wird durch die Vorformung vermieden, daß sich die Gürteleinlage im praktischen Betrieb durch Stauchungen aufwerfen und innere Zerstörungen des Luftreifens hervorrufen kann.

Wegen der besonderen Geometrie der erfindungsgemäßen Gürteleinlage können auch an sich formsteife Materialien wie Stahl oder harter Kunststoff in extrem geringen Dicken zum Herstellen der ringförmigen Gürteleinlage benutzt werden.

Obwohl bei einer Gürteleinlage für Luftreifen der mittlere, sich im Bereich der Lauffläche des Luftreifens befindliche Abschnitt für die Stabilität des Luftreifens von ausschlaggebender Bedeutung ist, spielen auch die Seitenbereiche an den Schultern eine nicht zu vernachlässigende Rolle. So kann man die Umfangsdehnung der Ränder der erfindungsgemäßen Gürteleinlage gegenüber dem mittleren Bereich begrenzen, beispielsweise durch Abstützung der Ränder mit aufgelegten dehnsteiferen Materialien oder auch durch Verlängerung der Ränder bis in den Schulter- und Flankenbereich des Luftreifens. Mit diesen Maßnahmen werden relativ unterschiedliche Verformungen in den nebeneinander verlaufenden Dehnungszonen weitgehend verhindert, so daß die ungelochten eben verlaufenden Abschnitte der Einlage nahezu parallel zueinander verlaufen. Dadurch wird einerseits die Seitensteifigkeit des Luftreifens über das höhere Widerstandsmoment verbessert und andererseits die Torsionsverformungsmöglichkeit der gesamten Gürteleinlage verringert.

Insgesamt wird durch die Erfindung eine Gürteleinlage vorgeschlagen, welche gegenüber vorbekannten Gürteleinlagen einerseits eine hohe Umfangsfestigkeit bei gleichzeitig ausreichender Dehnbarkeit und Rückformbarkeit aufweist und andererseits die erforderliche Quersteifigkeit liefert, weil die Gürteleinlage wenigstens einen sich über die gesamte Breite der Lauffläche und sogar noch ggf. bis in den Flankenbereich des entsprechenden Radialreifens erstreckenden Ring aufweist, der sowohl die Umfangskräfte als auch die Seitenkräfte und eventuell auftretende Torsionskräfte aufnimmt.

Die erfindungsgemäße Gürtellage erhöht das Formschlupfpotential eines entsprechend ausgestatteten Reifens gegenüber bekannten Luftreifen sowohl in Längs- als auch in Querrichtung um mindestens 10 %.

Das durch die erfindungsgemäße Gürteleinlage konstruktiv erreichte verbesserte Formschlupfpotential der Gürtelstruktur gleicht Verspannungen aus einer seitlichen Verschiebung der Aufsetzpunkte der Zykloiden aus Abrollumfang und Laufstreifenumfang des entsprechend ausgestatteten Luftreifens bis zu 10 % der Sehne im Aufstandsbereich des Luftreifens aus.

Der Stoß der ringförmig ausgebildeten Gürteleinlage, d.h. die Stelle, an der die Enden der zu einem Ring gelegten Bänder oder Streifen aneinander stoßen, ist abgesetzt oder in einem Winkel von kleiner als 90° zur Umfangsrichtung verlaufend ausgebildet, damit der Stoß nicht schlagartig in den Abplattungsbereich des Luftreifens einläuft und dadurch Überbeanspruchungen und somit Schäden des Reifenmaterials verursachen kann.

Die Ränder der ringförmigen Gürteleinlage sind beispielsweise stärker gegen Dehnung ausgelegt als der mittlere Bereich, d h. also weniger dehnbar als der mittlere Bereich. Das kann beispielsweise dadurch herbeigeführt werden, daß die Ränder der ringförmigen Gürteleinlage durch elastisch dehnbares Material abgestützt sind, beispielsweise durch Fadenoder Garnmaterial.

Andererseits kann auch der mittlere Bereich der ringförmigen Gürteleinlage stärker gegen Dehnung ausgelegt bzw. geschützt sein als die Randbereiche, was beispielsweise dadurch erzielt wird, daß der mittlere Bereich der ringförmigen Gürteleinlage durch elastisch dehnbares Material stärker als die Randbereiche abgestützt wird. Elastisch dehnbares Material kann auch in diesem Falle Faden- oder Garnmaterial sein.

Nach einem weiteren Merkmal der Erfindung können die Ränder der ringförmigen Gürteleinlage über die Schulterbereiche des entsprechend ausgestatteten Luftreifens bis in die seitlichen Flanken des Reifens geführt sein und sich dabei außerhalb des Laufstreifenbereiches des Luftreifens direkt an den Festigkeitsträgern der Karkasse des Reifens abstützen. Bei dieser Ausführungsform der erfindungsgemäßen Gürteleinlage verlaufen die seitlichen Abschnitte der Einlage bis in Bereiche des Luftreifens, die frei von tangentialen Kräften und Spannungen sind und in denen sich die Karkasse seitlich ausbeulen kann.

Um sich der bombierten Form des Luftreifens problemlos anpassen zu können, sind die seitlichen Abschnitte der Gürteleinlage bei dieser Ausführungsform geschlitzt ausgebildet oder mit Einschnitten, die senkrecht zur Umfangsrichtung der Gürteleinlage verlaufen, versehen.

Nach einer anderen Ausführungsform der Erfindung ist die Gürteleinlage aus einem schmalen Band endlos von Rand zu Rand der Einlage gewickelt. Dabei kann nur der Anfang bzw. das Ende des Bandes mit der angrenzenden Lage der Wicklung verbunden, beispielsweise verschweißt, sein. Überstehende Kanten und Ecken können nach Fertigstellung der Gürteleinlage entfernt werden.

Zweckmäßig nimmt die erfindungsgemäße Gürteleinlage zwischen den Schultern des entsprechend ausgestatteten Luftreifens auch bei konvexem Aufbau unter der betriebsbedingten Streckung im Laufflächenbereich bzw. Aufstandsbereich des Luftreifens die Form eines flachen Zylinders ein.

Der im gestreckten Zustand des Luftreifens zylindrische Ring der erfindungsgemäßen Gürteleinlage kann im rückgeformten Zustand im Aufstandsbereich, beispielsweise beim Überfahren von Unebenheiten usw., beliebige Querschnittsverformungen ausführen.

Nach einem weiteren Merkmal der Erfindung können die von den Lochungen quer unterbrochenen bzw. in Segmente unterteilten Sicken bzw. Aus- und Einbuchtungen der erfindungsgemäßen Gürteleinlage relativ zueinander unterschiedlich gestreckt werden, so daß auch räumlich begrenzte Verformungen ohne negative Einflüsse auf andere Bereiche der Gürteleinlage und des entsprechend ausgestatteten Luftreifens möglich sind.

In der Zeichnung sind schematisch Ausführungsbeispiele der erfindungsgemäßen Gürteleinlage für einen Luftreifen dargestellt, und zwar zeigt
- Figur 1: eine schaubildliche Teilansicht eines aufgeschnitten dargestellten Luftreifens für Fahrzeuge, der mit einer erfindungsgemäßen Gürteleinlage ausgestattet ist,
- Figur 2: eine schaubildliche Teilansicht einer Ausführungsform der erfindungsgemäßen Gürteleinlage,
- Figur 3: eine Seitenansicht einer abgewandelten Ausführungsform der erfindungsgemäßen Gürteleinlage,
- Figur 4: eine Seitenansicht einer anderen Ausführungsform der erfindungsgemäßen Gürteleinlage,
- Figur 5: eine Seitenansicht noch einer anderen Ausführungsform der erfindungsgemäßen Gürteleinlage,
- Figur 6: eine Teildraufsicht auf noch eine andere Ausführungsform der erfindungsgemäßen Gürteleinlage,
- Figur 7: eine Seitenansicht der Gürteleinlage aus Figur 6,
- Figur 8: eine schaubildliche Teilansicht einer weiteren Ausführungsform der erfindungsgemäßen Gürteleinlage,
- Figur 9: eine Draufsicht auf die erfindungsgemäße ringförmige Gürteleinlage im Bereich der Stoßstelle,
- Figur 10: eine Ansicht einer aus parallen Bändern gebildeten erfindungsgemäßen Gürteleinlage und
- Figur 11: eine Ansicht einer aus einem Band endlos gewickelten erfindungsgemäßen Gürteleinlage.

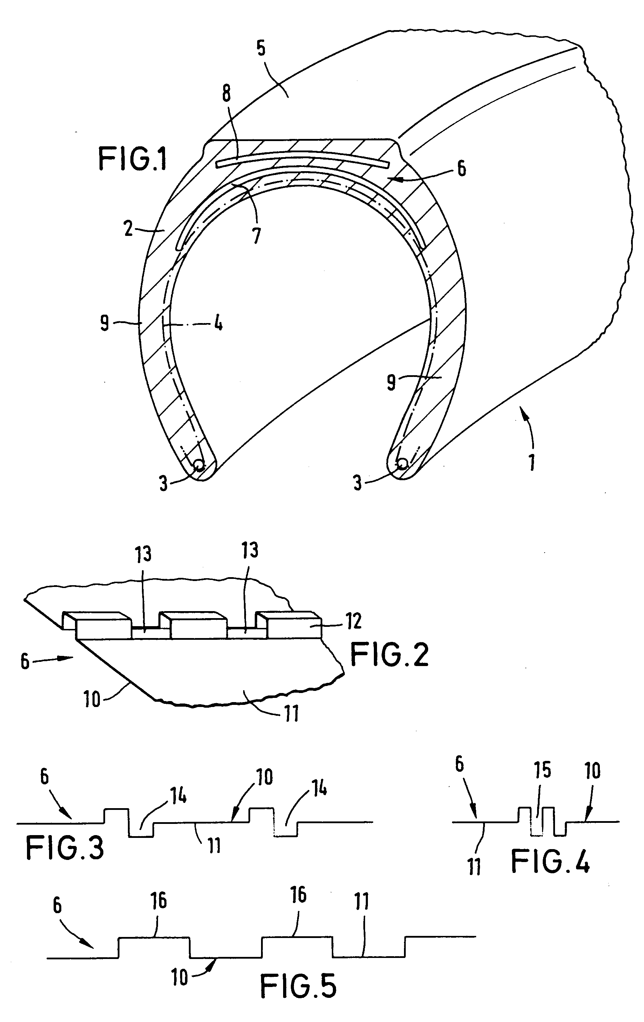

In Figur 1 ist ein Luftreifen (1) für Fahrzeuge dargestellt, der einen torusförmigen Körper (2) aus Gummimaterial aufweist und im Bereich seiner beiden Wulste jeweils einen Kernring (3) enthält. Im torusförmigen Körper (2) eingebettet befindet sich eine Karkasse (4) üblicher Ausführung, die mit ihren Enden um die beiden Kernringe (3) der Wulste geführt ist.

Im Bereich der Lauffläche (5) des Luftreifens (1) befindet sich über der Karkasse (4) eine Gürteleinlage (6), die sich mit ihren Randbereichen (7) bis in die Seitenflanken (9) des Luftreifens (1) erstreckt und sich dort auf der Karkasse (4) abstützt.

Zwischen der Gürteleinlage (6) und der Lauffläche (5) des Luftreifens (1) befindet sich außerdem eine gummierte Kordeinlage (8), welche die Gürteleinlage (6) stützt.

Bei der in Figur 2 dargestellten Ausführungsform besteht die Gürteleinlage (6) aus einer sich über die gesamte Breite erstreckenden biegsamen, jedoch in ihrer Ebene formsteifen Folie (10) mit zwischen ebenen oder flachen Abschnitten (11) angeordneten Erhebungen (12), die beim dargestellten Ausführungsbeispiel U-förmig ausgebildet sind, jedoch auch bogenförmig ausgebildet sein können. Die Erhebungen (12) enthalten im Abstand nebeneinander Ausschnitte (13), die den als Dehnungszonen dienenden Erhebungen (12) eine gewisse seitliche Biegsamkeit verleihen.

Bei der Ausführungsform gemäß Figur 3 sind die Dehnungszonen der Folie (10) als kombinierte Aus- und Einbuchtungen (14) ausgebildet. Diese Aus-und Einbuchtungen können ebenfalls Ausschnitte (13) enthalten, die in der Zeichnung aber nicht zu erkennen sind.

Bei der Ausführungsform gemäß Figur 4 enthält die Folie (10) der Gürteleinlage (6) eine abgewandelte Form von Aus- und Einbuchtungen (15), ist aber im übrigen ähnlich aufgebaut wie bei den Ausführungsformen gemäß Figur 2 und 3.

Während bei den Ausführungsformen gemäß Figur 2 bis 4 die zwischen den Erhebungen (12) bzw. Aus- und Einbuchtungen (14 und 15) befindlichen ebenen Abschnitte (11) der Folie (10) im Verhältnis zu den Erhebungen bzw. Aus- und Einbuchtungen verhältnismäßig groß oder lang sind, sind bei der Ausführungsform gemäß Figur 5 die Erhebungen (16) der Gürteleinlage (6) etwa ebenso breit oder lang wie die zwischen diesen Erhebungen befindlichen geraden oder flachen Abschnitte (11) der Folie (10). Aber auch in diesem Falle können die Erhebungen (16) nicht dargestellte Ausschnitte wie die Ausschnitte (13) gemäß Figur 2 enthalten.

In allen Ausführungsformen sind die Erhebungen bzw. Aus- und Einbuchtungen in Stirnansicht rechteckig ausgebildet. Es ist jedoch auch eine abgerundete oder abgeflachte Ausführungsform der Erhebungen oder Aus- und Einbuchtungen möglich. Wesentlich ist, daß zwischen gerade und flach verlaufenden Abschnitten (11) durch Erhebungen oder Aus- und Einbuchtungen Dehnungszonen gebildet sind.

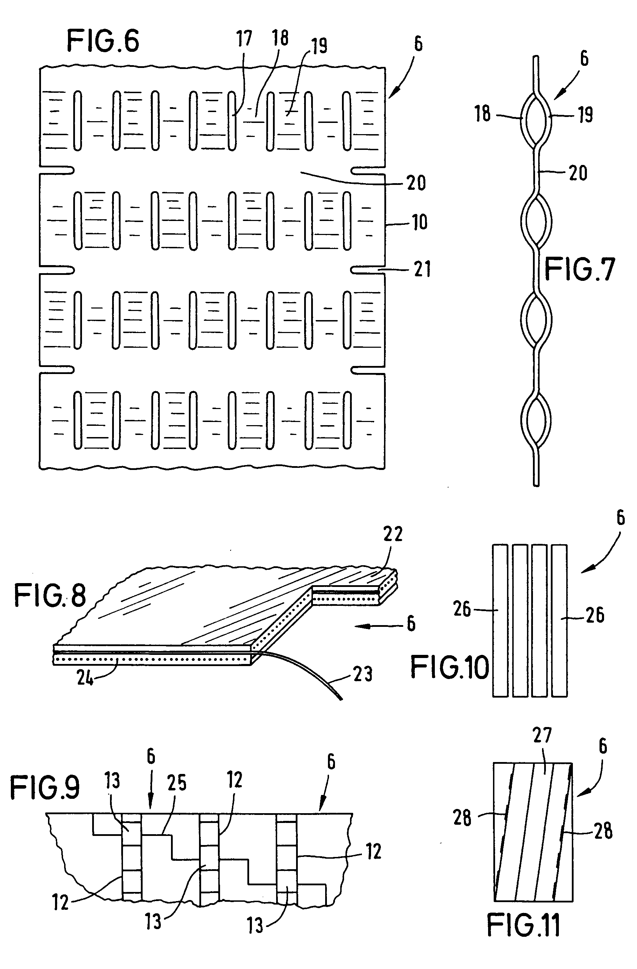

Bei der Ausführungsform gemäß Figur 6 und 7 besteht die Gürteleinlage (6) wiederum aus einer Folie (10), die jedoch im Gegensatz zu den vorher erläuterten Ausführungsformen in Reihen Einschnitte (17) enthält, die sich in Längsrichtung bzw. Umfangsrichtung der ringförmigen Gürtellage (6) erstrecken. Zwischen den Einschnitten (17) sind abwechselnd Ausbuchtungen (18) und Einbuchtungen (19) gebildet, die sich in entgegengesetzten Richtungen über die Grundform der Folie (10) erheben, wie Figur 7 zeigt. Diese gegenläufigen Ausbuchtungen (18) und Einbuchtungen (19) bilden die gewünschten Dehnungszonen mit der ebenfalls gewünschten Biegemöglichkeit. Zwischen den Reihen von Einschnitten (17) befinden sich auch bei dieser Ausführungsform ebene oder gradlinig verlaufende Abschnitte (20) der Folie (10). Von den Längskanten der Folie (10) gehen weitere Einschnitte (21) aus, die sich senkrecht zur Umfangsrichtung der ringförmigen Gürteleinlage (6) erstrecken und dazu bestimmt sind, die seitlichen Bereiche der Folie (10) so verformen zu können, daß sie sich der Biegung des torusförmigen Luftreifens (1) im Randbereich der Lauffläche (5) desselben bzw. im Bereich der Flanken (9) besser anpassen.

Bei allen zuvor beschriebenen Ausführungsformen kann die Folie (10) der Gürteleinlage (6) aus Kunststoff wie verhältnismäßig hartem Kunststoff bestehen, weil sie extrem dünn ausgebildet werden kann. Es ist aber auch möglich, die Folie (10) als dünnes Metallblech auszuführen.

Bei der Ausführungsform gemaß Figur 8 besteht die Gurteleinlage (6) aus einem bahnartigen Matrix-System (22), das in Umfangsrichtung der Gürteleinlage verlaufende dehnbare Fäden (23) und in Querrichtung der Gürteleinlage (6) verlaufende dehnsteife Fäden (24) enthält, die in eine Masse eingebettet sind, welche sich mit dem Gummimaterial des Luftreifens gut verbindet. Im übrigen kann die Gürteleinlage (6) der Ausführungsform gemäß Figur 8 ähnliche Konturen oder Gestaltungen wie die Gürteleinlagen gemäß Figur 2 bis 7 aufweisen.

Aus Figur 9 ist erkennbar, daß der Stoß bzw. die Verbindungsstelle zwischen den Enden der zu einem Ring gelegten Folie (10) der Gürteleinlage (6) nach einer abgestuften Linie (25) verläuft, um den Stoß über eine größere Strecke zu verteilen. Statt einer abgestuften Linie (25) kann der Stoß auch nach einer Geraden verlaufen, die jedoch zur Längsrichtung oder Umfangsrichtung der Gürteleinlage (6) in einem Winkel geneigt verläuft.

In Figur 10 ist gezeigt, daß die Gürteleinlage (6) aus mehreren endlos gelegten Ringen (26) aus dünnem Band- oder Folienmaterial gebildet ist. Diese Ringe (26) können aber im übrigen ähnlich wie die Folien (10) bei den zuvor beschriebenen Ausführungsbeispielen aufgebaut und ausgebildet sein.

Figur 11 zeigt schließlich, daß die Gürteleinlage (6) aus einem endlos zu einem Ring gewickelten Band (27) gebildet sein kann. Die äußersten Lagen dieses Wickels sind über kurze Schweißnähte (28) an benachbarten Wicklungen befestigt, um ein Auseinanderfallen des Wickels zu verhindern.

## Patentansprüche

1. Gürteleinlage für Luftreifen (1), mit wenigstens einem sich in Umfangsrichtung des Reifens erstreckenden Ring (6) aus Folien- oder Bandmaterial (10; 22; 26, 27), der quer zur Umfangsrichtung des Reifens sich erstreckende Dehnungszonen wie Aus- bzw. Einbuchtungen (12; 14, 15, 16) enthält,
**dadurch gekennzeichnet,**
daß der Ring (6) sich in seiner Umfangsrichtung erstreckende Einschnitte (17) oder Ausnehmungen (13) begrenzter Länge enthält, die sich im Bereich der Aus- bzw. Einbuchtungen (12; 14, 15, 16) befinden und die sich in Querrichtung des Ringes (6) erstreckende Lücken (13, 17) der Aus- bzw. Einbuchtungen (12; 14, 15, 16) sind, und daß der Ring (6) zwischen den die Einschnitte (17) oder Ausnehmungen (13) enthaltenden Aus- bzw. Einbuchtungen (12; 14, 15, 16) flache bzw. gerade, ununterbrochene Abschnitte (11; 20) aufweist.

2. Gürteleinlage nach Anspruch 1, dadurch gekennzeichnet, daß der Ring (6) aus einer Folie (10) aus hartem Kunststoff besteht, die eine Dicke von 0,1 mm und weniger aufweist.

3. Gürteleinlage nach Anspruch 1, dadurch gekennzeichnet, daß der Ring (6) aus Stahlblech bzw. Stahlfolie (10) mit einer Dicke von 0,1 mm und weniger besteht.

4. Gürteleinlage nach Anspruch 1, dadurch gekennzeichnet, daß der Ring (6) aus einem beispielsweise Fäden (23, 24) oder Fasern enthaltenden Kompositmaterial (22) besteht.

5. Gürteleinlage nach einem der Ansprüche 1 bis 4, dadurch gekennzeichnet, daß der Ring (6) von den Seiten desselben ausgehende Einschnitte (21) oder Ausschnitte enthält.

6. Gürteleinlage nach einem der Ansprüche 1 bis 5, dadurch gekennzeichnet, daß der Ring (6) einen stufenförmig oder einen schräg verlaufend ausgebildeten Stoß (25) aufweist.

7. Gürteleinlage nach einem der Ansprüche 1 bis 6, dadurch gekennzeichnet, daß der Ring (6) in den Randbereichen oder im mittleren Bereich eine verringerte Dehnbarkeit aufweist.

8. Gürteleinlage nach einem der Ansprüche 1 bis 7, dadurch gekennzeichnet, daß der Ring (6) aus einem von Rand zu Rand des Ringes endlos gewickelten schmalen Band (27) besteht, dessen Enden vorzugsweise mit der jeweils angrenzenden Lage der Wicklung fest verbunden sind.

9. Gürteleinlage nach einem der Ansprüche 1 bis 8, dadurch gekennzeichnet, daß die Randbereiche des Ringes (6) über die Schultern des die Gürteleinlage enthaltenden Luftreifens (1) hinaus sich bis in die Flanken (9) dieses Luftreifens erstrecken.

10. Gürteleinlage nach einem der Ansprüche 1 bis 9, dadurch gekennzeichnet, daß der Ring (6) auf seiner Außen- und/oder Innenseite eine Stütze in Form einer in 90° - bezogen auf seine Aquatorialachse - verlaufenden gummierten Cordlage (8) aufweist.

## Claims

1. Breaker for pneumatic tires (1) comprising at least one ring (6) extending in circumferential direction of the tire and made of sheet or strip material (10; 22; 26, 27) and comprising expansion areas such as convex or concave bulges (12; 14, 15, 16) transversely extending in circumferential direction of the tire,
**characterized in that**
said ring (6) comprises circumferentially extending recesses (17) or clearances (13) of limited length located in the area of said convex or concave bulges (12; 14, 15, 16) which are gaps (13, 17) in said convex or concave bulges (12; 14, 15, 16) extending transversally to said ring (6), and in that said ring (6) is provided between said convex or concave bulges (12; 14, 15, 16) comprising said recesses (17) or clearances (13) with flat or square continuous sections (11; 20).

2. Breaker for pneumatic tires as defined by claim 1,
**characterized in that**
said ring (6) consists of a hard synthetic sheet (10) having a thickness of 0.1 mm or less.

3. Breaker for pneumatic tires as defined by claim 1,
**characterized in that**
said ring (6) consists of a steel plate or steel sheet (10) having a thickness of 0.1 mm or less.

4. Breaker for pneumatic tires as defined by claim 1,
**characterized in that**
said ring (6) consists of a compound material (22) containing for instance filaments or fibers (23, 24).

5. Breaker for pneumatic tires as defined by either of claims 1 to 4,
**characterized in that**
said ring (6) comprises indentations (21) or cutouts laterally extending therefrom.

6. Breaker for pneumatic tires as defined by either of claims 1 to 5,
**characterized in that**
said ring (6) comprises a stepped or inclined joint (25).

7. Breaker for pneumatic tires as defined by either of claims 1 to 6,
**characterized in that**
in the rim areas or in the center area said ring (6) possesses reduced expansion capacity.

8. Breaker for pneumatic tires as defined by either of claims 1 to 7,
**characterized in that**
said ring (6) consists of an endless rim to rim wound narrow stripe (27) the ends of which are preferably solidly secured to the adjacent winding layer.

9. Breaker for pneumatic tires as defined by either of claims 1 to 8,
**characterized in that**
the rim portions of said ring (6) extend over the shoulders of the tire breaker comprising tire (1) into flanks (9) of said tire.

10. Breaker for pneumatic tires as defined by either of claims 1 to 9,
**characterized in that**
said ring (6) comprises at its outer side and/or inner side a support having the form of a rubber covered breaker cord strip transversally extending at an angle of 90° relative to its equatorial axis.

## Revendications

1. Ceinture de renforcement pour pneumatiques (1), comprenant au moins un anneau (6) s'étendant en direction circonférentielle du pneumatique et réalisé dans une matière sous forme de feuille ou de bande (10; 22; 26, 15), et comprenant des zones de dilatation telles que des courbures concaves ou convexes (12; 14, 15, 16) s'étendant transversalement par rapport à sa circonférence,
**caractérisée en ce que**
ledit anneau (6) comprend des découpes (17) ou creux (13) circonférentiels d'une longueur limitée situés dans la zone des courbures convexes ou concaves (12; 14, 15, 16) et qui représentent des interstices (13, 17) des courbures convexes ou concaves (12; 14, 15, 16) s'étendant transversalement par rapport audit anneau (6), et en ce que ledit anneau (6) comprend entre les courbures concaves ou convexes (12; 14, 15, 16) formant les découpes (17) ou creux (13) des sections planes ou droites continues (11; 20).

2. Ceinture de renforcement pour pneumatiques suivant la revendication 1,
**caractérisée en ce que**
ledit anneau (6) est réalisé dans une feuille (10) en matière synthétique dure ayant une épaisseur maximale de 0,1 mm.

3. Ceinture de renforcement pour pneumatiques suivant la revendication 1,
**caractérisée en ce que**
ledit anneau (6) est réalisé dans une tôle ou feuille d'acier (10) ayant une épaisseur maximale de 0,1 mm.

4. Ceinture de renforcement pour pneumatiques suivant la revendication 1,
**caractérisée en ce que**
ledit anneau (6) est réalisé dans une matière composite (22) comprenant par exemple des fils ou des fibres (23, 24).

5. Ceinture de renforcement pour pneumatiques suivant l'une des revendications 1 à 4,
**caractérisée en ce que**
ledit anneau (6) comprend des découpes ou creux (21) partant de ses côtés.

6. Ceinture de renforcement pour pneumatiques suivant l'une des revendications 1 à 5,
**caractérisée en ce que**
ledit anneau (6) comprend une jointure (25) échelonnée ou inclinée.

7. Ceinture de renforcement pour pneumatiques suivant l'une des revendications 1 à 6,
**caractérisée en ce que**
dans ses zones de bordure ou dans sa zone centrale ledit anneau (6) possède une élasiticité réduite.

8. Ceinture de renforcement pour pneumatiques suivant l'une des revendications 1 à 7,
**caractérisée en ce que**
ledit anneau (6) est réalisé dans une bande étroitre (27) bobinée en continu bord à bord dudit anneau, et dont les extrémités sont de préférence fixées de manière non détachable à la couche adjacente du bobinage.

9. Ceinture de renfordement pour pneumatiques suivant l'une des revendications 1 à 8,
**caractérisée en ce que**
les zones de bordure dudit anneau (6) s'étendent au-delà des épaulements du pneumatique (1) comprenant ladite ceinture de renforcement jusque dans les flancs (9) dudit pneumatique.

10. Ceinture de renforcement pour pneumatiques suivant l'une des revendications 1 à 9,
**caractérisée en ce que**
sur son côté extérieur et/ou intérieur ledit anneau (6) comprend un support sous forme de couche de cordes gommées (8) s'étendant à 90° par rapport à son axe équatorial.
